# EUROPEAN PATENT APPLICATION

(11) **EP 1 985 194 A2**
(43) Date of publication of application: **29.10.2008**
(21) Application number: 07018234.0
(22) Date of filing: 17.09.2007
(51) Int. Cl.: A42B 1/24

(54) **Headwear with signal generating capability**

(30) Priority: 24.04.2007 DE 202007005984 U
(71) Applicant: Chen, Jen-Lin, Cupertino, CA 95014 (US)
(72) Inventor: Chen, Jen-Lin, Cupertino, CA 95014 (US)
(74) Representative: Ebner von Eschenbach, Jennifer

(57) **Abstract**

A headwear with signal generating capability includes: a headwear body (2); a signal output unit (3) mounted on the headwear body (2) for generating at least one of audio and video signals; a control circuit (4) including a controller (41) coupled electrically to the signal output unit (3) for controlling activation and deactivation of the signal output unit (3); and a switch (51) mounted on the headwear body (2) and coupled electrically to the control circuit (4) for controlling operating states of the control circuit (4).

## Description

This invention relates to headwear, more particularly to headwear with signal generating capability.

U.S. Patent No. 6, 223, 355 discloses a decorative headwear that includes a body portion with first and second ends, a mouth defining the first end, a pouch defining the second end, first means for selectively opening and closing the pouch, a module disposed in the pouch, switching means formed inside the module, an electrical circuitry enclosed in the module and connected to the switching means, and a plurality of decorative lights attached to the body portion and connected to the electrical circuitry for creating an illuminated display on the decorative headwear. However, the aforesaid decorative headwear cannot generate audio or video signals, which can provide special effects for advertising or amusement purposes.

The present invention attempts to provide headwear with signal generating capability that can generate at least one of audio and video signals.

According to one aspect of the present invention, there is provided a headwear with signal generating capability. The headwear comprises: a headwear body; a signal output unit mounted on the headwear body for generating at least one of audio and video signals; a control circuit including a controller coupled electrically to the signal output unit for controlling activation and deactivation of the signal output unit; and a switch mounted on the headwear body and coupled electrically to the control circuit for controlling operating states of the control circuit.

According to another aspect of the present invention, there is provided a headwear with circuit actuating capability. The headwear comprises: a headwear body having a principle wall including a cap-like crown portion that is adapted to cover head of a user and that has an open end, and a plate-like bill portion that protrudes outwardly from the open end of the crown portion; a control circuit mounted on the principle wall; and a switch embedded in the bill portion of the principal wall and coupled electrically to the control circuit.

According to yet another aspect of the present invention, there is provided a headwear that comprises: a headwear body having a principle wall including a cap-like crown portion that is adapted to cover head of a user and that has an open end, and a plate-like bill portion that protrudes outwardly from the open end of the crown portion; a control circuit mounted on the principle wall; and a speaker embedded in the bill portion of the principal wall and coupled electrically to the control circuit.

In drawings which illustrate some but not all embodiments of the invention,
Fig. 1A is a bottom perspective view of the first preferred embodiment of a headwear according to this invention;
Fig. 1B is a top perspective view of the first preferred embodiment;
Fig. 1C is a schematic diagram illustrating the connection between a control circuit and a signal output unit of the first preferred embodiment;
Fig. 2A is a bottom perspective view of the second preferred embodiment of the headwear according to this invention;
Fig. 2B is a top perspective view of the second preferred embodiment;
Fig. 3 is a bottom perspective view of the third preferred embodiment of the headwear according to this invention;
Fig. 4A is a top perspective view of the fourth preferred embodiment of the headwear according to this invention;
Fig. 4B is a schematic diagram illustrating the connection between a control circuit and a signal output unit of the fourth preferred embodiment; and
Fig. 5A is a bottom perspective view of the fifth preferred embodiment of the headwear according to this invention; and
Fig. 5B is a top perspective view of the fifth preferred embodiment.

Before the present invention is described in greater detail, it should be noted that same reference numerals have been used to denote like elements throughout the specification.

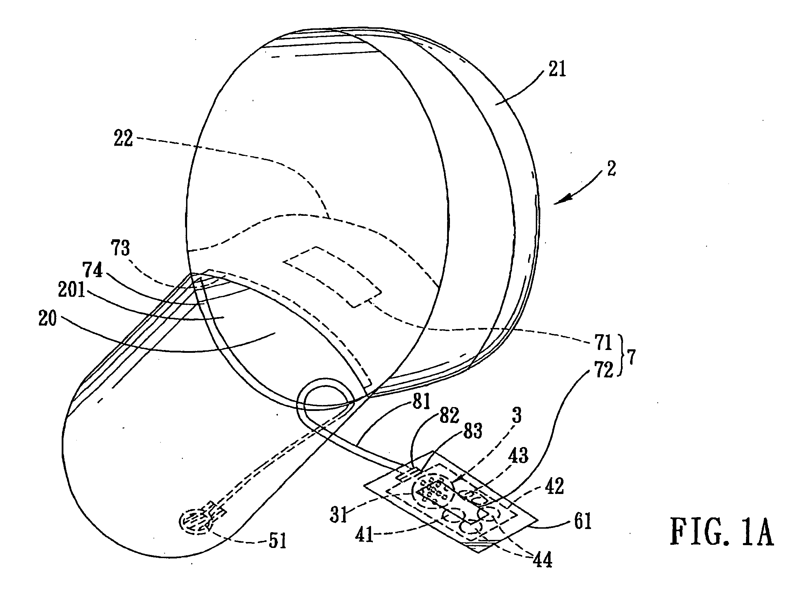

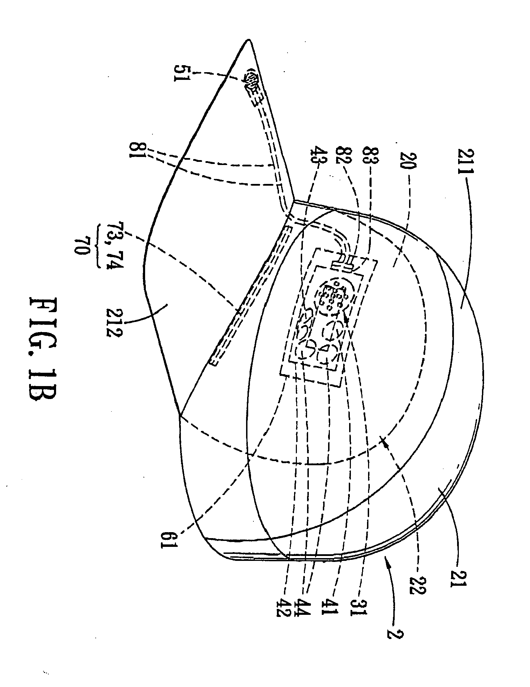

Figs. 1A to 1C illustrate the first preferred embodiment of a headwear with signal generating capability according to this invention. The headwear includes: a headwear body 2; a signal output unit 3 mounted on the headwear body 2 for generating at least one of audio and video signals; a control circuit 4 including a controller 41 coupled electrically to the signal output unit 3 for controlling activation and deactivation of the signal output unit 3; and a first switch 51 mounted on the headwear body 2 and coupled electrically to the control circuit 4 for controlling operating states, such as on and off states, of the control circuit 4.

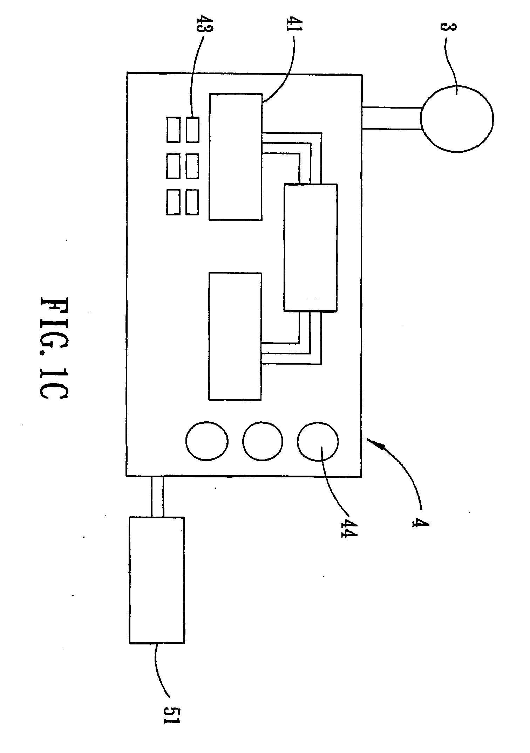

In this embodiment, the headwear body 2 is in the form of a hat, and has a principal wall 21 and a first lining 22 connected to and cooperating with the principal wall 21 to define a first cavity 20 therebetween. The first cavity 20 has an open end 201 for access thereinto. The signal output unit 3 and the control circuit 4 (see Fig. 1C) are mounted detachably in the first cavity 20. In more detail, the principal wall 21 of the headwear body 2 has a cap-like crown portion 211 that is adapted to cover the head of the user and that defines an open end, and a plate-like bill portion 212 that protrudes from the open end of the crown portion 211. The first lining 22 is connected to and cooperates with an interior of the crown portion 211 of the principal wall 21 of the headwear body 2 to define the first cavity 20. The first switch 51 is embedded in the bill portion 212 of the principal wall 21 of the headwear body 2. It is noted that since the bill portion 212 of the principal wall 21 can be seen by the user, the first switch 51 is preferably embedded in the bill portion 212 of the principal wall 21 as compared to the crown portion 211 of the principal wall 21 so as to permit the user to easily locate the first switch 51 and to thereby facilitate operation of the first switch 51.

A thin container 61 is mounted securely in the first cavity 20. The signal output unit 3 and the control circuit 4 are received in the container 61. Preferably, the container 61 is made from a water-proof material, such as a plastic material or a water-proof fabric material, so as to protect the signal output unit 3 and the control circuit 4 from coming into contact with water when the headwear gets wet.

The headwear further includes a positioning unit 7 that includes a first interlocking member 71 attached to the first lining 22, and a second interlocking member 72 attached to an exterior of the container 61 and engaging releasably the first interlocking member 71 so as to position the container 61 at a desired position in the first cavity 20. Alternatively, the first interlocking member 71 can be attached to an interior of the principal wall 21 of the headwear body 2. Preferably, the first and second interlocking members 71, 72 engage each other in a hook-and-loop manner using hook-and-loop means, such as Velcro™ means, so as to permit detachment of the container 61 from headwear body 2.

A closure unit 70 is secured to the first lining 22 and the principal wall 21 for closing and opening the open end 201 of the first cavity 20, and is preferably in the form of Velcro™ means including first and second locking members 73, 74 that are respectively attached to the first lining 22 and the principal wall 21 and that engage each other in a hook-and-loop manner. Alternatively, the closure unit 70 can be in the form of a zipper or a button.

In this embodiment, the control circuit 4 further includes a circuit board 42 received fittingly in the container 61. The signal output unit 3 includes a speaker 31 mounted on the circuit board 42. The controller 41 is mounted on the circuit board 42. The control circuit 4 further includes a plurality of passive components 43 and batteries 44 mounted on the circuit board 42.

Preferably, the first switch 51 is in the form of a membrane switch that has a relatively thin body so as to prevent any adverse effect on the appearance of the headwear.

The first switch 51 is connected to the circuit board 42 through an electrical wiring 81 and first and second connectors 82, 83. The electrical wiring 81 extends from the first switch 51, is embedded in the bill portion 212 of the headwear body 2, and is connected to the first connector 82. The second connector 83 is provided on the circuit board 42 and is connected electrically and detachably to the first connector 82, thereby permitting detachment of the signal output unit 3 and the control circuit 4 from the headwear body 2.

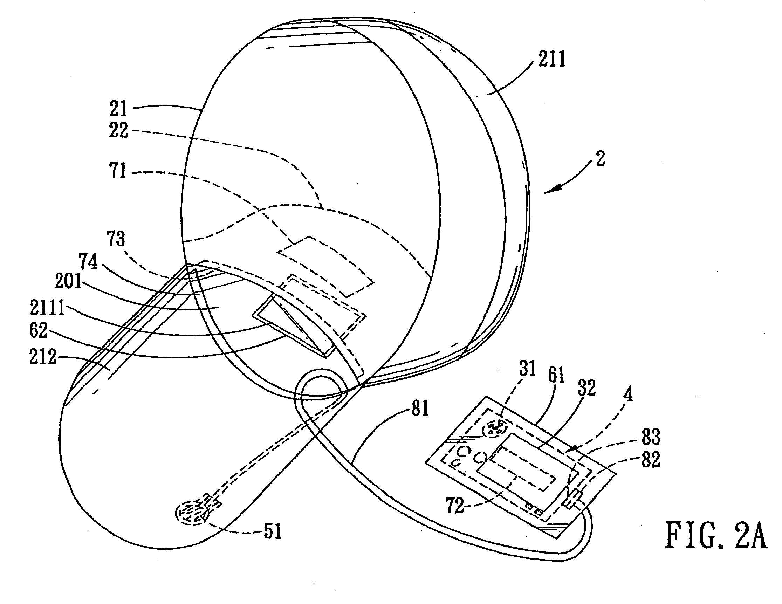

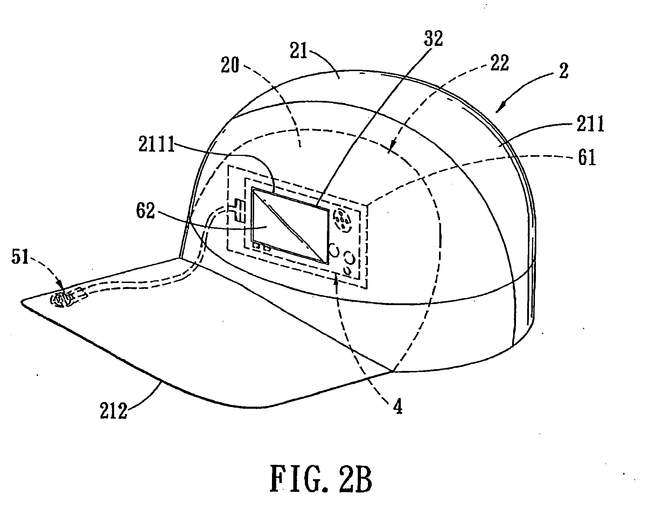

Figs. 2A and 2B illustrate the second preferred embodiment of the headwear according to this invention. The second preferred embodiment differs from the first preferred embodiment mainly in that the signal output unit 3 of this embodiment includes a liquid crystal display module that is received in the container 61 and that has a liquid crystal display panel 32. A speaker 31 is optionally provided on the liquid crystal display module. In this embodiment, the crown portion 211 of the principal wall 21 is formed with a window 2111 for exposing the liquid crystal display panel 32. A transparent sheet 62 is attached securely to an interior of the crown portion 211 of the principal wall 21 for covering the window 2111. The transparent sheet 62 can be secured to the interior of the crown portion 211 of the principal wall 21 of the headwear body 2 in a conventional manner, such as stitching, adhesive bonding, etc..

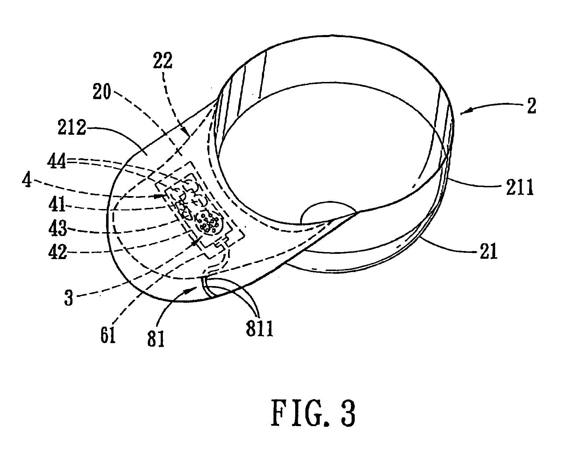

Fig. 3 illustrates the third preferred embodiment of the headwear according to this invention. The third preferred embodiment differs from the first embodiment mainly in that the first lining 22 is connected to the bill portion 212 of the principal wall 21 of the headwear body 2 such that the first cavity is formed in the bill portion 212 of the principal wall 21. In addition, the first switch 51 in the form of a membrane switch is dispensed with in this embodiment. The electrical wiring 81 includes a pair of spaced apart conductive lines 811 having end portions laid on an exterior of the bill portion 212 of the principal wall 21 so that a circuit state of the control circuit 4 can be actuated upon connection of the end portions of the conductive lines 811 by a finger of the user or a conductor. The conductive lines 811 can be made from a conductive ink material, a conductive thread or yarn material. It is noted that the speaker 31 of the signal output unit 3 is preferably embedded in the bill portion 212 of the principal wall 21 as compared to the crown portion 211 of the principal wall 21 so as to achieve a better acoustic effect and to provide a clearer sound for the user.

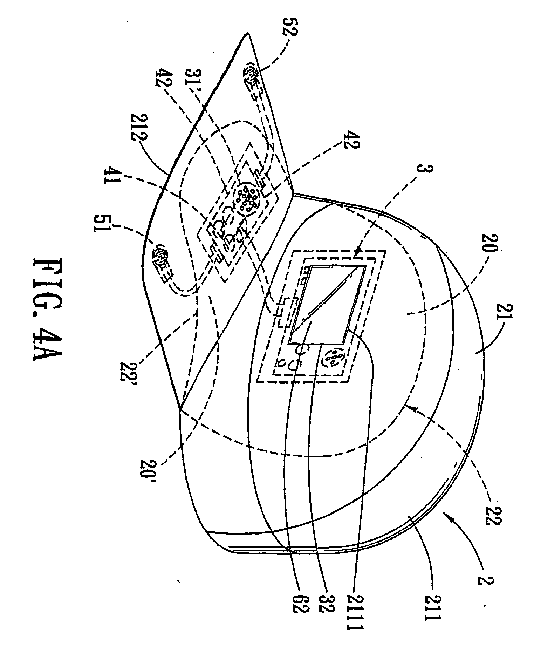

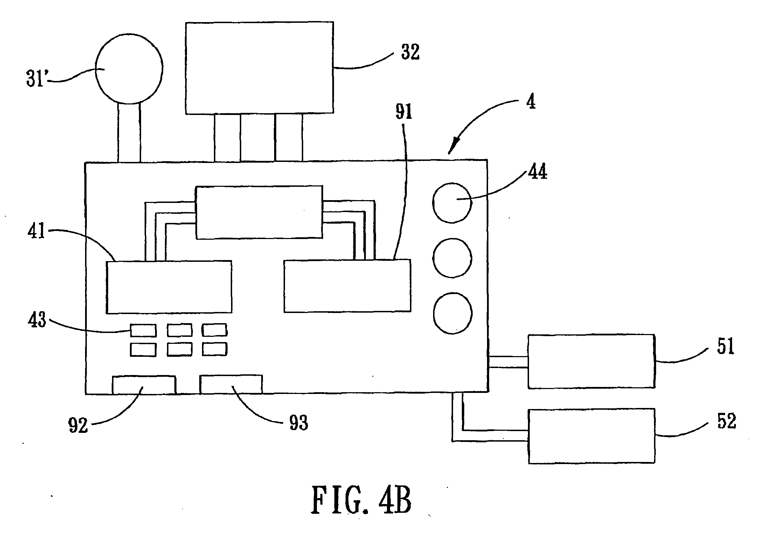

Figs. 4A and 4B illustrate the fourth preferred embodiment of the headwear according to this invention. The fourth preferred embodiment differs from the second preferred embodiment mainly in that a second lining 22' is connected to and cooperates with the bill portion 212 of the principal wall 21 to define a second cavity 20' therebetween and that the signal out put unit 3 includes a liquid crystal display panel 32. In this embodiment, the circuit board 42 is mounted in the second cavity 20' and has the controller 41 anda speaker 31' mounted thereon. In addition, a second switch 52 is embedded in the bill portion 212 of the principal wall 21 of the headwear body 2 and is coupled to the control circuit 4 for controlling corresponding ones of the circuit states of the control circuit 4, such as states of activation and deactivation of different electronic components or controlling the volume of the speaker 31'.

In this embodiment, the headwear further includes: a memory unit 91 mounted on the circuit board 42 (see Fig. 4A) and coupled electrically to the control circuit 4 for storing audio and video information; a USB socket 92 provided on the circuit board 42 and coupled electrically to the control circuit 4; and a memory card slot 93 provided on the circuit board 42, coupled electrically to the control circuit 4, and adapted to receive a storing card, such as a Secure Digital (SD) card or a Multi Media Card (MMC).

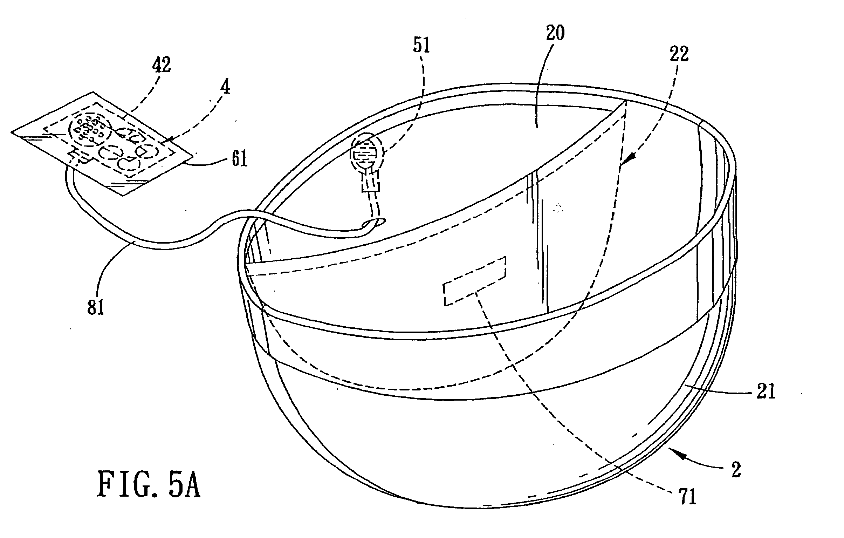

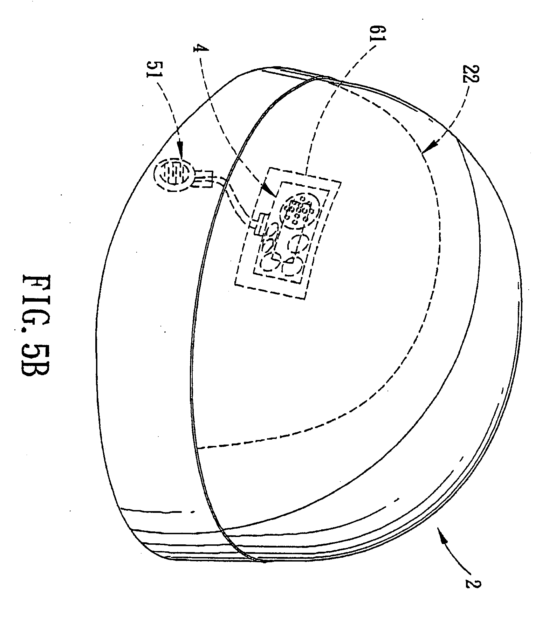

Figs. 5A and 5B illustrate the fifth preferred embodiment of the headwear according to this invention. The fifth preferred embodiment differs from the previous embodiments mainly in that the headwear body 2 is in the form of a skiing cap.

With the inclusion of the signal output unit 3, which generates audio and/or video signals, in the headwear of this invention, special effects for advertising or amusement purposes can be enhanced.

### Broadly this writing discloses the following:

A headwear with signal generating capability which includes: a headwear body (2); a signal output unit (3) mounted on the headwear body (2) for generating at least one of audio and video signals; a control circuit (4) including a controller (41) coupled electrically to the signal output unit (3) for controlling activation and deactivation of the signal output unit (3) ; and a switch (51) mounted on the headwear body (2) and coupled electrically to the control circuit (4) for controlling operating states of the control circuit (4).

## Claims

1. A headwear with signal generating capability, comprising:
a headwear body (2);
a signal output unit (3) mounted on said headwear body (2) for generating at least one of audio and video signals;
a control circuit (4) including a controller (41) coupled electrically to said signal output unit (3) for controlling activation and deactivation of said signal output unit (3); and
a first switch (51) mounted on said headwear body (2) and coupled electrically to said control circuit (4) for controlling operating states of said control circuit (4).

2. The headwear of claim 1, wherein said headwear body (2) has a principal wall (21) including a cap-like crown portion (211) that is adapted to cover head of a user and that has an open end, and a plate-like bill portion (212) that protrudes outwardly from said open end of said crown portion (211), said first switch (51) being embedded in said bill portion (212) of said principal wall (21).

3. The headwear of claim 1, wherein said headwear body (2) has a principal wall (21) including a cap-like crown portion (211) that is adapted to cover head of a user and that has an open end, and a plate-like bill portion (212) that protrudes outwardly from said open end of said crown portion (211), said signal output unit (3) including a speaker (31) embedded in said bill portion (212) of said principal wall (21).

4. The headwear of claim 1, wherein said headwear body (2) has a principal wall (21) and a first lining (22) connected to and cooperating with said principal wall (21) to define a first cavity (20) therebetween, said first cavity (20) having an open end (201) for access thereinto, said signal output unit (3) and said control circuit (4) being mounted detachably in said first cavity (20).

5. The headwear of claim 4, further comprising a thin container (61) mounted securely in said first cavity (20), said signal output unit (3) and said control circuit (4) being received in said container (61).

6. The headwear of claim 5, wherein said container (61) is made from a water-proof material.

7. The headwear of claim 5, wherein said container (61) is made from a material selected from one of a plastic material and a water-proof fabric material.

8. The headwear of claim 5, further comprising a positioning unit (7) that includes a first interlocking member (71) attached to said first lining (22), and a second interlocking member (72) attached to said container (61) and engaging releasably said first interlocking member (71) so as to position said container (61) at a desired position in said first cavity (20).

9. The headwear of claim 8, wherein said first and second interlocking members (71, 72) engage each other in a hook-and-loop manner.

10. The headwear of claim 4, further comprising a closure unit (70) secured to said first lining (22) and said principal wall (21) for closing and opening said open end (201) of said first cavity (20).

11. The headwear of claim 10, wherein said closure unit (70) includes first and second locking members (73, 74) that are respectively attached to said first lining (22) and said principal wall (21) and that engage each other in a hook-and-loop manner.

12. The headwear of claim 4, wherein said signal output unit (3) includes a liquid crystal display module mounted on said principal wall (21) and having a liquid crystal display panel (32), said principal wall (21) being formed with a window (2111) for exposing said liquid crystal display panel (32).

13. The headwear of claim 12, further comprising a transparent sheet (62) attached securely to an interior of said principal wall (21) for covering said window (2111).

14. The headwear of claim 4, wherein said control circuit (4) further includes a circuit board (42), said signal output unit (3) including a speaker (31) mounted on said circuit board (42).

15. The headwear of claim 14, further comprising an electrical wiring (81) extending from said first switch (51) and embedded in said headwear body (2), a first connector (82) connected to said electrical wiring (B1), and a second connector (83) provided on said circuit board (42) and connected electrically and detachably to said first connector (82).

16. The headwear of claim 15, wherein said first switch (51) is a membrane switch.

17. The headwear of claim 4, wherein said principal wall (21) of said headwear body (2) has a crown portion (211) and a bill portion (212), said first lining (22) being connected to said crown portion (211) of said principal wall (21) of said headwear body (2), said control circuit (4) including a circuit board (42) mounted in said first cavity (20), said signal output unit (3) being mounted on said circuit board (42).

18. The headwear of claim 1, wherein said headwear body (2) has a principal wall (21) that includes a crown portion (211) and a bill portion (212), and a first lining (22) that is connected to and that cooperates with said crown portion (211) of said principal wall (21) to define a first cavity (20) therebetween, said first cavity (20) having an open end (201) for access thereinto, said crown portion (211) being formed with a window (2111), said headwear body (2) further having a second lining (22') connected to and cooperating with said bill portion (212) of said principal wall (21) to define a second cavity (20') therebetween, said control circuit (4) further including a circuit board (42) mounted in said second cavity (20'), said controller (41) being mounted on said circuit board (42), said signal output unit (3) being mounted in said first cavity (20) and including a liquid crystal display panel (32) mounted on said crown portion (211) of said principal wall (21) and exposed from said window (2111), said first switch (51) being embedded in said bill portion (212) of said principal wall (21) of said headwear body (2).

19. The headwear of claim 18, further comprising a speaker (31) mounted on said circuit board (42) and coupled electrically to said control circuit (4).

20. The headwear of claim 18, further comprising a second switch (52) embedded in said bill portion (212) of said principal wall (21) of said headwear body (2) and coupled to said control circuit (4) for controlling corresponding ones of the circuit states of said control circuit (4).

21. The headwear of claim 18, further comprising a memory unit (91) mounted on said circuit board (42) and coupled electrically to said control circuit (4) for storing audio and video information.

22. The headwear of claim 18, further comprising a USB socket (92) provided on said circuit board (42) and coupled electrically to said control circuit (4).

23. The headwear of claim 18, further comprising a memory card slot (93) provided on said circuit board (42), coupled electrically to said control circuit (4), and adapted to receive one of a SD card and a MMC card.

24. A headwear with circuit actuating capability, comprising:
a headwear body (2) having a principle wall (21) including a cap-like crown portion (211) that is adapted to cover head of a user and that has an open end, and aplate-like bill portion (212) that protrudes outwardly from said open end of said crown portion (211);
a control circuit (4) mounted on said principle wall (21); and
a switch (51) embedded in said bill portion (212) of said principal wall (21) and coupled electrically to said control circuit (4).

25. The headwear of claim 24, further comprising a speaker (31) embedded in said bill portion (212) of said principle wall (21) and coupled electrically to said control circuit (4).

26. A headwear comprising:
a headwear body (2) having a principle wall (21) including a cap-like crown portion (211) that is adapted to cover head of a user and that has an open end, and a plate-like bill portion (212) that protrudes outwardly from said open end of said crown portion (211);
a control circuit (4) mounted on said principle wall (21); and
a speaker (31) embedded in said bill portion (212) of said principal wall (21) and coupled electrically to said control circuit (4).
